# FASCICULE DE BREVET EUROPEEN

(11) **EP 0 521 775 B1**
(45) Date de publication et mention de la délivrance du brevet: **01.03.1995**
(21) Numéro de dépôt: 92401865.8
(22) Date de dépôt: 30.06.1992
(51) Int. Cl.: B21F 1/02, B21D 1/05

(54) **Appareil portatif de redressement de tubes**
Tragbare Vorrichtung zum Richten von Rohren
Portable apparatus for straightening tubes

(30) Priorité: 05.07.1991 FR 9108492
(43) Date de publication de la demande: 07.01.1993
(73) Titulaire: SOCIETE JOSEPH SAURON MATERIEL INDUSTRIEL, F-91200 Athis Mons (FR); GAZ DE FRANCE, 75017 Paris (FR)
(72) Inventeur: Sauron Jean, F-91210 Draveil (FR); Thomas, Jean-Jacques, F-75018 Paris (FR)
(74) Mandataire: Durand, Yves Armand Louis

(56) Documents cités:
- DE-C- 529 198
- FR-A- 456 463
- GB-A- 765 707
- GB-A- 1 553 373
- US-A- 1 414 371
- US-A- 4 334 418

## Description

La présente invention a essentiellement pour objet un appareil portatif de redressement de tubes, et notamment de tubes en matière plastique telle que par exemple polyéthylène haute densité.

Comme on le sait, de tels tubes sont utilisés pour le transport de fluides divers, tels que du gaz, mais il y a des problèmes qui se posent au niveau de la jonction bout à bout de deux tubes.

Pour ce faire, on se contentait jusqu'à présent de mettre bout à bout deux sections de tubes que l'on réunissait à l'aide d'un manchon électro-soudable par exemple.

Cependant, en sortie de bobine ou de dévidoir, les extrémités des sections de tubes, présentent, comme on le comprend, une extrémité quelque peu courbée. Et, jusqu'à présent, on réunissait les extrémités courbées de deux sections de tubes, de sorte que l'assemblage par manchon pouvait être difficile à réaliser du fait de l'alignement bout à bout et axial nécessairement imparfait des extrémités des sections de tubes à assembler.

La présente invention a pour but de remédier à cet inconvénient notamment, en proposant un appareil de redressement de tubes de diamètre relativement important, et qui permet de supprimer la courbure des tubes au moins pendant un temps suffisant pour permettre la jonction et l'assemblage bout à bout de ces tubes suivant un alignement axial parfait.

A cet effet, l'invention a pour objet un appareil portatif de redressement de tubes notamment en matière plastique telle que par exemple polyéthylène, du type comprenant un bâti et au moins trois organes d'appui sur le tube qui sont relativement mobiles par rapport au bâti dont ils sont solidaires, caractérisé en ce que le bâti est une poutre munie à ses deux extrémités respectivement d'un premier et d'un deuxième organes d'appui mobiles dont l'un, ou premier organe d'appui mobile, est actionné par un vérin ou analogue solidaire de la poutre, tandis qu'une poignée de manutention de l'appareil est montée transversalement sur la poutre entre le premier et le deuxième organes d'appui mobiles et porte un troisième organe d'appui mobile.

Suivant une autre caractéristique de cet appareil, le premier organe d'appui mobile actionné par le vérin est constitué par une bielle ou analogue articulée par une extrémité sur la tige du vérin et par son autre extrémité portant un galet ou analogue sur une biellette elle-même articulée sur la poutre.

Suivant encore une autre caractéristique de l'invention, le deuxième organe d'appui mobile est constitué par un élément monté réglable et coulissant sur la poutre suivant une direction sensiblement orthogonale à son axe.

Selon un mode de réalisation préféré, l'élément précité est une chape supportant un galet et qui porte une vis sans fin vissée dans une pièce solidaire d'une extrémité de la poutre de manière qu'au vissage la chape puisse coulisser par rapport à la poutre suivant une direction orthogonale à son axe.

Selon encore une autre caractéristique de l'invention, la poignée de manutention précitée présente sensiblement la forme d'un U dont les branches sont montées réglables sur des guides prévus sur la poutre.

On précisera ici que la poignée est solidaire de la partie médiane de la poutre, et la base du U formant cette poignée comporte un galet, tandis que le sommet du U de la poignée comporte une traverse reliant les deux branches du U.

On précisera encore ici que sur la poutre sont prévus des goussets de renfort au niveau de la fixation de la poignée sur ladite poutre.

Suivant encore une autre caractéristique de l'invention, un boîtier de commande du vérin précité est solidaire de la poutre, et ce boîtier de commande présente avantageusement une forme de poignée.

La poutre, suivant un mode de réalisation préféré, est une poutre creuse dans laquelle est logé le vérin précité dont le corps est fixé au deuxième organe d'appui mobile précité.

Selon encore une autre caractéristique de l'appareil de cette invention, les galets ou analogues solidaires respectivement des trois organes d'appui mobiles peuvent être entraînés en rotation par un moteur permettant l'avance automatique de la poutre creuse sur le tube à redresser.

Mais d'autres caractéristiques et avantages de l'invention apparaîtront mieux dans la description détaillée qui suit et se réfère aux dessins annexés, donnés uniquement à titre d'exemple, et dans lesquels :
La figure 1 est une vue schématique et de côté de l'appareil, avec coupe suivant l'axe de la poutre.
La figure 2 est une vue en coupe suivant la ligne II-II de la figure 1.
La figure 3 est une vue en coupe de la poignée de manutention de l'appareil, suivant la ligne III-III de la figure 1.
La figure 4 est une vue en coupe suivant la ligne IV-IV de la figure 1.
La figure 5 est une vue en coupe d'une variante de réalisation du deuxième organe d'appui mobile monté à l'une des extrémités de la poutre.
La figure 6 est une vue en coupe de ce deuxième organe d'appui mobile suivant la ligne VI-VI de la figure 5, ou, plus précisément, une demi-vue en coupe et une demi-vue extérieure de cet organe.

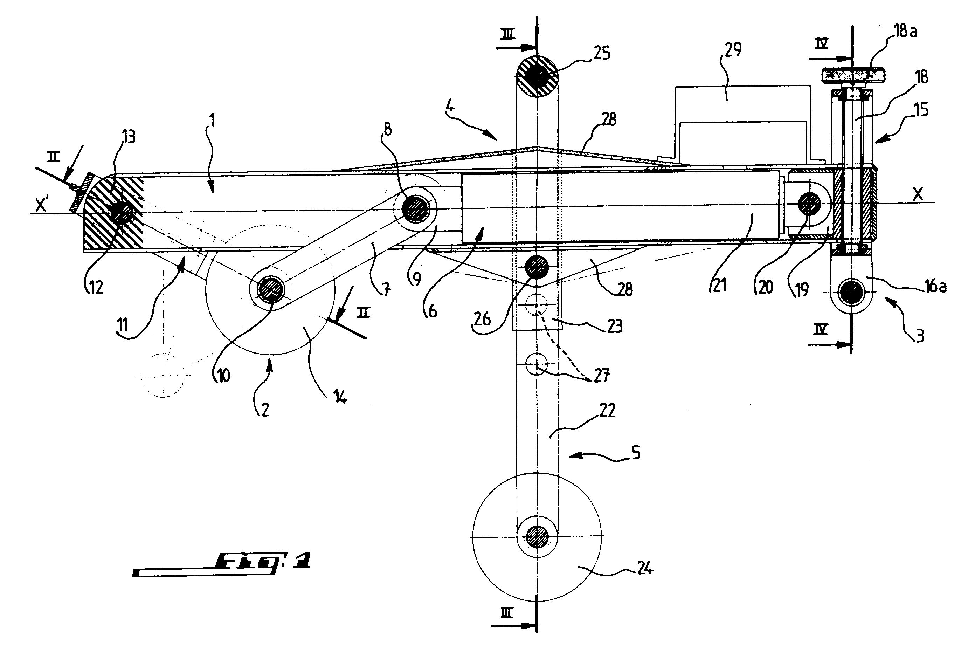

En se reportant notamment à la figure 1, on voit qu'un appareil portatif de redressement de tubes, conforme aux principes de l'invention, comprend essentiellement une poutre creuse 1 dont l'une des extrémités porte un premier organe d'appui mobile 2, et dont l'extrémité opposée porte un deuxième organe d'appui mobile 3, tandis qu'une poignée 4 de manutention de cet appareil est montée transversalement sur la poutre 1 entre les deux organes d'appui mobile 2 et 3.

La poignée de manutention 4 est solidaire de la partie médiane de la poutre creuse 1 et porte un troisième organe d'appui mobile 5.

Le premier organe d'appui mobile 2 est actionné par un vérin 6 logé à l'intérieur de la poutre creuse 1, comme on le voit bien sur la figure 1, ce vérin pouvant être un vérin hydraulique, pneumatique, électrique ou même mécanique.

Plus précisément, le premier organe d'appui mobile 2 se compose d'une bielle 7 articulée par une extrémité 8 sur la tige 9 du vérin 6, tandis que l'autre extrémité 10 de la bielle 7 est articulée sur une biellette 11 elle-même articulée en 12 sur une extrémité 13 de préférence pleine de la poutre creuse 1.

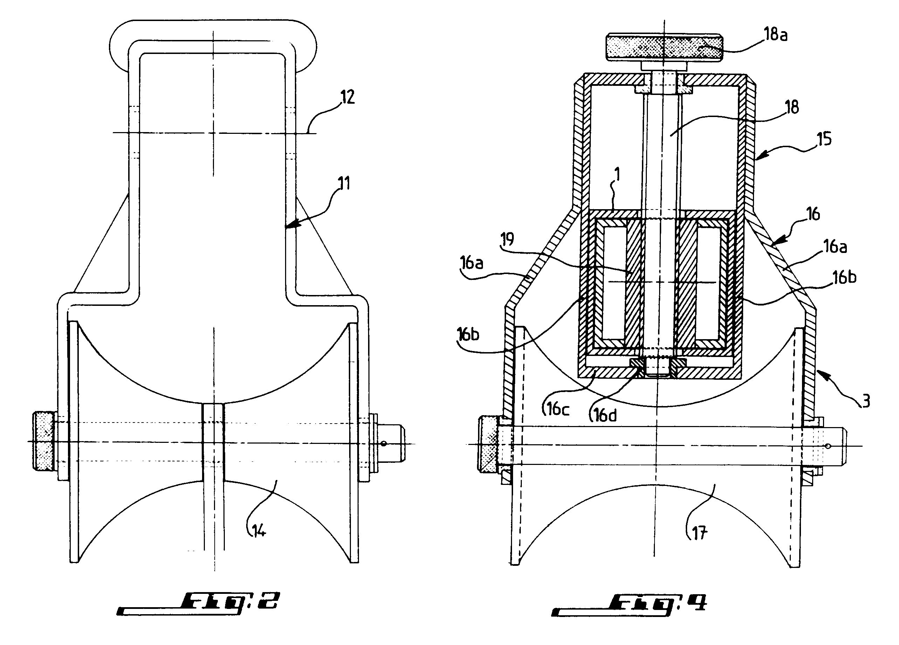

Plus précisément, la biellette 11, comme on le voit bien sur la figure 2 présente la forme d'une chape entre les branches de laquelle est monté un galet 14 qui est en quelque sorte porté par le point d'articulation 10 de la bielle 7 à la biellette ou chape 11.

On comprend donc de ce qui précède que l'actionnement de la tige 9 du vérin 6 provoquera un déplacement du galet 14, comme matérialisé par des traits pointillés sur la figure 1.

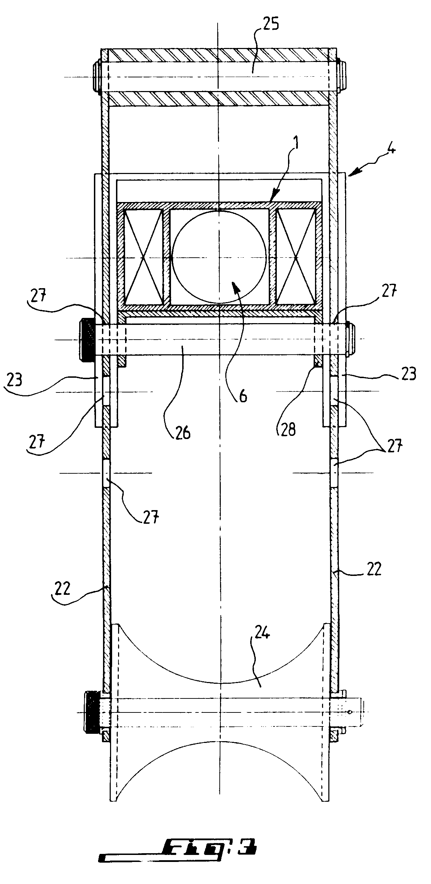

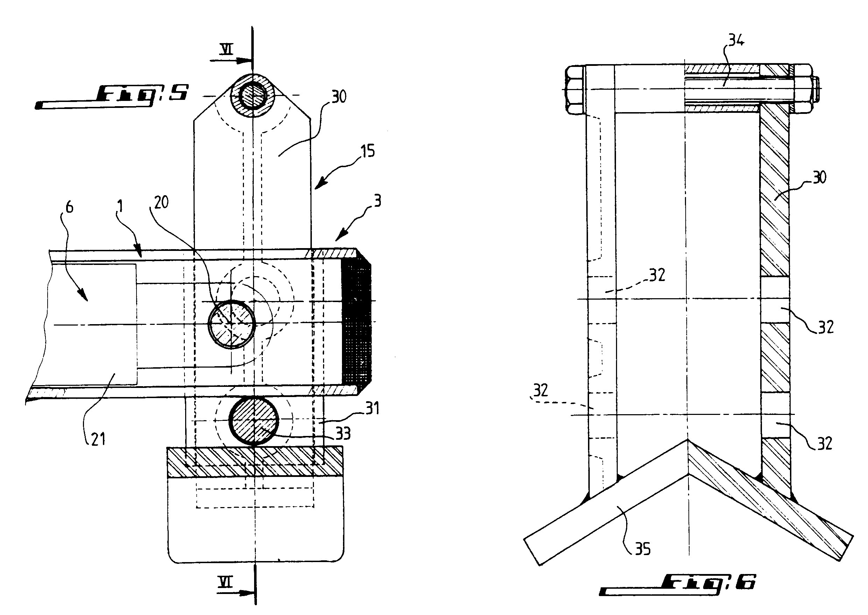

Le deuxième organe d'appui mobile 3, bien visible sur la partie droite de la figure 1, et également sur la figure 4 est essentiellement constitué par un élément 15 monté réglable et coulissant à l'une des extrémités de la poutre creuse 1, suivant une direction qui est de préférence orthogonale à l'axe X-X′ de ladite poutre creuse.

Suivant un mode de réalisation préféré, et comme cela est bien visible sur la figure 4, l'élément 15 est constitué par une chape 16 qui porte un galet 17 monté fou entre les branches de la chape.

La chape 16 supporte, en partie haute, une vis sans fin 18 manoeuvrable par un bouton 18a et vissée dans une pièce 19 susceptible de venir s'encastrer en bout de la poutre creuse 1, comme cela se voit bien sur la figure 1. Sur cette figure, on voit que la pièce 19 est clavetée par un axe 20 sur la partie arrière du corps 21 du vérin 6.

On comprend donc de ce qui précède qu'en effectuant le vissage ou le dévissage de la vis 18, la chape 16 pourra coulisser dans un sens ou dans l'autre par rapport à la poutre creuse 1, et ce suivant une direction orthogonale à l'axe X-X′ de cette poutre. On observera ici que la chape 16 comporte deux branches 16a portant à leur extrémité le galet 17 et est munie de deux sous-branches 16b susceptibles de coulisser par rapport à la poutre creuse 1 et réunies par une traverse 16c formant palier 16d pour l'extrémité de la vis sans fin 18.

Comme il apparaît clairement sur les figures 1 et 3, la poignée 4 de manutention de l'appareil présente la forme générale d'un U dont les branches 22 sont montées réglables sur des guides 23 solidaires de la poutre creuse 1 contenant le vérin 6.

La base du U formant la poignée 4 comporte un galet 24 du même type que les galets sus-mentionnés 14 et 17, tandis que le sommet du U comporte une traverse 25 reliant les deux branches 22 du U et permettant la préhension de l'appareil.

Les branches 22 peuvent être clavetées sur les guides 23 par un axe 26 qui peut être introduit dans des trous étagés et en vis-à-vis 27 ménagé dans les branches 22 du U. On comprend donc que la fixation de la poignée de manutention 4 sur la poutre creuse 1, ou encore la position du galet 24, est réglable en raison des trois positions de clavetage possibles de la poignée 4 sur la poutre creuse 1.

On a montré en 28 sur les figures 1 et 3 des goussets de renfort solidaires de la poutre creuse 1 et situés au niveau de la fixation de la poignée 4 sur la poutre 1, c'est-à-dire au niveau des guides 23 et de l'axe 26.

Sur la figure 1, on a montré schématiquement en 29 un boîtier de commande du vérin 6, ce boîtier étant fixé sur la poutre creuse 1 et présentant avantageusement une forme de poignée.

En se reportant maintenant à la figure 5, on voit un autre mode de réalisation du deuxième organe d'appui mobile 3 qui est plus rudimentaire que celui visible sur les figures 1 et 4.

Ici, l'élément 15, comme on le voit bien sur les figures 5 et 6 est constitué par un étrier 30 monté coulissant dans un guide 31 solidaire de et orthogonal à la poutre creuse 1. Cet étrier 30 comporte dans ses branches des orifices 32 en vis-à-vis et étagés permettant un réglage de l'étrier par rapport à la poutre creuse 1, à l'aide d'un axe 33. L'étrier 30 peut également être fixé au corps 21 du vérin 6 par un axe 20 comme décrit précédemment.

La partie supérieure de l'étrier 30 est entretoisée par un axe 34, tandis que, sur sa partie inférieure est soudée une pièce 35 en forme d'équerre, destinée à prendre appui sur le tube à redresser.

A cet égard, il est à noter qu'un tel élément d'appui pourrait être prévu, sans sortir du cadre de l'invention, à la place des galets 14 et 24 décrits précédemment.

Mais on préférera cependant que les trois organes d'appui mobiles 2, 3, 5 soient munis respectivement d'un galet 14, 17, et 24 comme décrit précédemment.

Bien que cela ne soit pas représenté sur les figures, ces trois galets pourront être entraînés en rotation par un moteur (non représenté) permettant l'avance automatique de la poutre creuse 1 sur le tube (non représenté), à redresser.

Mais, pour une meilleure compréhension de l'invention, on expliquera brièvement ci-après comment s'effectue ce redressement, et cela en se référant plus particulièrement à la figure 1.

L'extrémité courbée du tube sortant du dévidoir est interposée dans l'espace formé entre les deux galets 14 et 17, et le galet 24, en ayant pris soin de régler d'une façon appropriée, c'est-à-dire en fonction du diamètre du tube à redresser, la position du galet 24 à l'aide de l'axe 26.

On actionnera ensuite le vérin 6 qui commandera le mouvement du galet 14, et un réglage fin pourra être effectué en agissant sur le bouton 18a de commande du galet 17.

Par conséquent, on supprimera ainsi la courbure résiduelle du tube qui sera parfaitement droit et dont les caractéristiques, lorsqu'il s'agit d'un tube de polyéthylène par exemple, laisseront un délai suffisamment long pour permettre une jonction bout à bout et un assemblage parfait de deux tubes redressés par l'appareil.

On a donc réalisé suivant l'invention un appareil portatif simple, fiable, peu coûteux et facilement utilisable sur les chantiers, qui permet la suppression ou l'inversion de la courbure des tubes d'une façon rapide et précise pour permettre l'assemblage bout à bout de ces tubes à l'aide d'un manchon électro-soudable par exemple.

Bien entendu, l'invention n'est limitée aux modes de réalisation décrits et illustrés qui n'ont été donnés qu'à titre d'exemple.

C'est ainsi que les organes d'appui sur le tube à redresser peuvent avoir une forme appropriée quelconque, de même que le vérin associé à cet appareil et que les matières constituant les divers éléments de l'appareil peuvent être aussi quelconques.

## Revendications

1. Appareil portatif de redressement de tubes notamment en matière plastique telle que par exemple polyéthylène, du type comprenant un bâti et au moins trois organes d'appui sur le tube qui sont relativement mobiles par rapport au bâti dont ils sont solidaires, caractérisé en ce que le bâti est une poutre (1) munie à ses deux extrémités respectivement d'un premier (2) et d'un deuxième (3) organes d'appui mobiles dont l'un, ou premier organe d'appui mobile (2), est actionné par un vérin ou analogue (6) solidaire de la poutre (1), tandis qu'une poignée (4) de manutention de l'appareil est montée transversalement sur la poutre (1) entre le premier (2) et le deuxième (3) organes d'appui mobiles et porte un troisième organe d'appui mobile (5).

2. Appareil selon la revendication 1, caractérisé en ce que le premier organe d'appui mobile (2) actionné par le vérin (6) est constitué par une bielle ou analogue (7) articulée par une extrémité (8) sur la tige (9) du vérin (6) et par son autre extrémité (10) portant un galet (14) sur une biellette (11) elle-même articulée (12) sur la poutre (1).

3. Appareil selon la revendication 1 ou 2, caractérisé en ce que le deuxième organe d'appui mobile (3) est constitué par un élément (15) monté réglable et coulissant sur la poutre (1), suivant une direction sensiblement orthogonale à son axe.

4. Appareil suivant la revendication 3, caractérisé en ce que l'élément précité (15) est une chape (16) supportant un galet (17) et qui porte une vis sans fin (18) vissée dans une pièce (19) solidaire d'une extrémité de la poutre (1) de manière qu'au vissage la chape (16) puisse coulisser par rapport à la poutre (1) suivant une direction orthogonale à son axe.

5. Appareil suivant l'une des revendications précédentes, caractérisé en ce que la poignée (4) de manutention précitée présente sensiblement la forme d'un U dont les branches (22) sont montées réglables sur des guides prévus sur la poutre (1).

6. Appareil selon la revendication 5, caractérisé en ce que la poignée précitée (4) est solidaire de la partie médiane de la poutre (1), la base du U formant cette poignée comportant un galet (24) et le sommet du U comportant une traverse (25) reliant les deux branches (22) du U.

7. Appareil selon l'une des revendications précédentes, caractérisé en ce que sur la poutre (1) sont prévus des goussets (28) de renfort au niveau de la fixation de la poignée (4) sur ladite poutre.

8. Appareil selon l'une des revendications précédentes, caractérisé par un boîtier (29) de commande du vérin (6) solidaire de la poutre (1) et présentant une forme de poignée.

9. Appareil suivant l'une des revendications précédentes, caractérisé en ce que la poutre précitée (1) est une poutre creuse dans laquelle est logé le vérin précité (6) dont le corps (21) est fixé au deuxième organe d'appui mobile (3).

10. Appareil selon l'une des revendications précédentes, caractérisé en ce que les galets (14, 17, 24) solidaires respectivement des trois organes d'appui mobiles (2, 3, 5) peuvent être entraînés en rotation par un moteur permettant l'avance automatique de la poutre creuse (1) sur le tube à redresser.

## Claims

1. Portable apparatus for straightening tubes in particular of plastics material such for example as polyethylene, of the type comprising a frame and at least three members for bearing upon the tube which are relatively movable with respect to the frame to which they are made fast, characterized in that the frame is a beam (1) provided at its two ends with a a first movable bearing member (2) and with a second movable bearing member (3), respectively, one of which or first movable bearing member (2) is actuated by a jack or the like (6) made fast to the beam (1) whereas a handle (4) for the handling of the apparatus is mounted transversely onto the beam (1) between the first and second movable bearing members (2) and (3) and carries a third movable bearing member (5).

2. Apparatus according to claim 1, characterized in that the first movable bearing member (2) actuated by the jack (6) is constituted by a link or the like (7) pivotally connected with one end (8) onto the rod (9) of the jack (6) and with its other end (10) carrying a roller (14) onto a small link (11) itself pivotally connected (12) onto the beam (1).

3. Apparatus according to claim 1 or 2, characterized in that the second movable bearing member (3) is constituted by an element (15) adjustably and slidably mounted onto the beam (1) in a direction substantially orthogonal to its axis.

4. Apparatus according to claim 3, characterized in that the aforesaid element (15) is a yoke (16) supporting a roller (17) and which carries an endless screw (18) screwed into a part (19) made fast to one end of the beam (1) so that upon screwing the yoke (16) may slide with respect to the beam (1) in a direction orthogonal to its axis.

5. Apparatus according to one of the foregoing claims, characterized in that the aforesaid handling handle (4) exhibits the shape substantially of a U the legs (22) of which are adjustably mounted onto guides provided on the beam (1).

6. Apparatus according to claim 5, characterized in that the aforesaid handle (4) is made fast to the middle portion of the beam (1), the base of the U forming this handle comprising a roller (24) and the top of the U comprising a cross-member (25) connecting both legs (22) of the U.

7. Apparatus according to one of the foregoing claims, characterized in that on the beam (1) are provided reinforcing gussets (28) at the level of the fastening of the handle (4) onto the said beam.

8. Apparatus according to one of the foregoing claims, characterized by a box (29) for operating the jack (6), made fast to the beam (1) and exhibiting the shape of a handle.

9. Apparatus according to one of the foregoing claims, characterized in that the aforesaid beam (1) is a hollow beam into which is housed the aforesaid jack (6) the body (21) of which is fastened to the second movable bearing member (3).

10. Apparatus according to one of the foregoing claims, characterized in that the rollers (14, 17, 24) made fast to the pre-movable bearing members (2, 3, 5), respectively, may be rotated by a motor allowing the automatic advance feed of the hollow beam (1) on the tube to be straightened.

## Patentansprüche

1. Tragbare Vorrichtung zum Richten von Rohren insbesondere aus Kunststoff, wie z.B. Polyäthylen, derjenigen Gattung, die einen Rahmen und wenigstens drei Glieder zur Abstützung an dem Rohr, die in bezug auf den Rahmen, mit welchem sie fest verbunden sind, verhältnismässig bewegbar sind, umfasst, dadurch gekennzeichnet, dass der Rahmen ein Balken (1) ist, der an seinen beiden Enden jeweils mit einem ersten (2) und mit einem zweiten (3) bewegbaren Abstützglied versehen ist, von denen das eine bzw. erste bewegbare Abstützglied (2) durch einen mit dem Balken (1) fest verbundenen Kraftzylinder oder dergleichen (6) betätigt wird, während ein Handgriff (4) zur Handhabung des Gerätes an dem Balken (1) zwischen dem ersten (2) und dem zweiten (3) beweglichen Abstützglied quer angeordnet ist und ein drittes bewegbares Abstützglied (5) trägt.

2. Vorrichtung nach Anspruch 1, dadurch gekennzeichnet, dass das durch den Kraftzylinder (6) betätigte erste bewegbare Abstützglied (2) durch einen Lenker oder dergleichen (7) gebildet wird, der mit einem Ende (8) an der Stange (9) des Kraftzylinders (6) und mit seinem eine Rolle (14) tragenden Ende (10) an einem kleinen Lenker (11), der selber an dem Balken (1) angelenkt (12) ist, angelenkt ist.

3. Vorrichtung nach Anspruch 1 oder 2, dadurch gekennzeichnet, dass das zweite bewegbare Abstützglied (3) durch ein an dem Balken (1) abstützbar und in einer zu seiner Achse etwa senkrechten Richtung gleitend angeordnet ist.

4. Vorrichtung nach Anspruch 3, dadurch gekennzeichnet, dass das vorgenannte Element (15) ein eine Rolle (17) tragender Bügel (16) ist, der eine endlose Schraube (18) trägt, die in einem mit einem Ende des Balkens (1) fest verbundenen Stück (19) eingeschraubt ist, so dass beim Schrauben, der Bügel (16) in bezug auf den Balken (1) in einer zu seiner Achse orthogonalen Richtung gleiten kann.

5. Vorrichtung nach einem der vorangehenden Ansprüche, dadurch gekennzeichnet, dass der vorgenannte Handhabungshandgriff (4) etwa die Gestalt eines U's aufweist, dessen Schenkel (22) an an dem Balken (1) vorgesehenen Führungen einstellbar angeordnet sind.

6. Vorrichtung nach Anspruch 5, dadurch gekennzeichnet, dass der vorgenannte Handgriff (4) mit dem mittleren Teil des Balkens (1) fest verbunden ist, wobei der untere Teil des diesen Handgriff bildenden U's eine Rolle (24) aufweist und der obere Teil des U's einen die beiden Schenke (22) des U's verbindenden Quersteg (25) aufweist.

7. Vorrichtung nach einem der vorangehenden Ansprüche, dadurch gekennzeichnet, dass Verstärkungszwickel (28) an dem Balken (1) im Bereich der Befestigung des Handgriffes (4) an dem besagten Balken vorgesehen sind.

8. Vorrichtung nach einem der vorangehenden Ansprüche, gekennzeichnet durch ein mit dem Balken (1) fest verbundenes und eine Handgriffgestalt aufweisendes Gehäuse (29) zur Betätigung des Kraftzylinders (6).

9. Vorrichtung nach einem der vorangehenden Ansprüche, dadurch gekennzeichnet, dass der vorgenannte Balken (1) ein hoher Balken ist, in welchem der vorgenannte Kraftzylinder (6), dessen Körper (21) an dem zweiten bewegbaren Abstützglied (3) befestigt ist, untergebracht ist.

10. Vorrichtung nach einem der vorangehenden Ansprüche, dadurch gekennzeichnet, dass die jeweils mit den drei bewegbaren Abstützgliedern (2, 3, 5) fest verbundenen Rollen (14, 17, 24) zur Drehung durch einen den selbsttätigen Vorschub des hohlen Balkens (1) an dem zu richtenden Rohr gestattenden Motor angetrieben werden können.
